# EUROPEAN PATENT APPLICATION

(11) **EP 4 830 901 A1**
(43) Date of publication of application: **28.10.2026**
(21) Application number: 24905689.6
(22) Date of filing: 13.09.2024
(51) Int. Cl.: B29C 64/245, B29C 64/30, B33Y 30/00, B33Y 40/00

(54) **THREE-DIMENSIONAL PRINTING PLATE-CHANGING TRANSPORTING APPARATUS AND PLATE-CHANGING SYSTEM**

(30) Priority: 18.12.2023 CN 202311748270
(71) Applicant: Prismlab China Ltd., Shanghai 201615 (CN); Prismlab Information Technology Ltd., Shanghai 201615 (CN)
(72) Inventor: HOU, Yunqi, Shanghai 201615 (CN); HOU, Feng, Shanghai 201615 (CN); WANG, Chunlei, Shanghai 201615 (CN); JIANG, Xin, Shanghai 201615 (CN); LI, Can, Shanghai 201615 (CN)
(74) Representative: Clarke, Modet y Cía., S.L.
(86) International application number: PCT/CN2024/118823
(87) International publication number: WO 2025/130197

(57) **Abstract**

Provided in the present application are a three-dimensional printing plate-changing transporting apparatus and a plate-changing system. The three-dimensional printing plate-changing transporting apparatus comprises: a collecting basket, used for accommodating a plurality of forming platforms, the plurality of forming platforms including blank forming platforms to be placed into a printing apparatus or printed forming platforms with an attached printing model after being printed by the printing apparatus; a supporting platform, used for bearing the collecting basket; and a moving mechanism, wherein the supporting platform is fixedly mounted on the moving mechanism, and the moving mechanism is suitable for driving the supporting platform to move, so that the collecting basket loaded with the plurality of forming platforms is driven to move between an initial position and a target position.

## Description

### Technical Field

The present application mainly relates to the field of three-dimensional printing, and in particular to a three-dimensional printing plate-changing transporting apparatus and a plate-changing system.

### Background

In the three-dimensional printing process, the forming platform after printing needs to be further spin-dried to remove uncured resin liquid on its surface. Due to space constraints and other factors, the printing and spin-drying processes are often carried out at different positions, so the forming platform needs to be taken out and transported. In three-dimensional printers in the prior art, the formed platforms need to be manually taken out and transported, which prevents the entire printing process from realizing streamlined operation, resulting in low efficiency and poor operation experience. In addition, manual handling of the forming platforms involves many uncertain factors and brings high difficulty in positioning and calibration. Accordingly, the plate-changing and transportation process of the three-dimensional printer is imperfect and requires further improvement.

### Summary

The technical problem to be solved by the present application is to provide a three-dimensional printing plate-changing transporting apparatus and a plate-changing system, which are convenient, reliable and highly automated.

In order to solve the above technical problems, the present application provides a collecting basket, used for accommodating multiple forming platforms, the multiple forming platforms including a blank forming platform to be placed into a printing apparatus or a printed forming platform with an attached printing model after printed by the printing apparatus; a supporting platform, used for bearing the collecting basket; and a moving mechanism, the supporting platform fixedly mounted on the moving mechanism, and the moving mechanism is suitable for driving the supporting platform to move, so that to drive the collecting basket loaded with the multiple forming platforms to move between an initial position and a target position.

In one embodiment of the present disclosure, the collecting basket includes a main body and a flange arranged at an upper edge of the main body, and at least a part of the flange is located on a moving path where the multiple forming platforms are placed into the collecting basket.

In one embodiment of the present disclosure, a bottom of the collecting basket is further provided with one or more liquid drain holes.

In one embodiment of the present disclosure, a bottom of the collecting basket is further provided with one or more positioning grooves, the supporting platform is further provided with one or more positioning portions adapted to match with the positioning grooves.

In one embodiment of the present disclosure, one of the positioning portions includes a fixing screw and a tapered protrusion arranged on the fixing screw, wherein, the positioning portions insert into the positioning grooves by a tip of the tapered protrusion.

In one embodiment of the present disclosure, the collecting basket further includes multiple limiting clamping grooves, each limiting clamping groove is used to limit one forming platform inside the collecting basket.

In one embodiment of the present disclosure, an upper part and/or a lower part of the limiting clamping groove further possesses a limiting elastic piece, the limiting elastic piece locates at a first position when the forming platform is not loaded into the collecting basket, and the limiting elastic piece is compressed to a second position after the forming platform is loaded into the collecting basket.

In one embodiment of the present disclosure, the moving mechanism further includes an Automated Guided Vehicle (AGV).

Another aspect of the present disclosure also provides a three-dimensional printing plate-changing system, comprising a printing apparatus, the plate-changing transporting apparatus according to the above-mentioned plate-changing transporting apparatus and a spin-drying apparatus, wherein, the plate-changing transporting apparatus is configured to carry and drive a printed forming platform with an attached printing model after printed by the printing apparatus to the spin-drying apparatus.

In one embodiment of the present disclosure, the plate-changing system further comprises a manipulator, the manipulator is suitable to gripping the printed forming platforms and placing place the printed forming platforms into the collecting basket of the plate-changing transporting apparatus.

Compared with the prior art, the three-dimensional printing plate-changing transporting apparatus of the three-dimensional printing plate-changing transporting apparatus and a plate-changing system provides collecting basket, supporting platform and moving mechanism, the supporting platform is disposed on the moving mechanism and bears the collecting basket, so that the plate-changing transporting apparatus can simultaneously realize automatic collection and transportation of the forming platforms.

### Brief Description of the Drawings

The drawings are included to provide a further understanding of the present application, and they are included and constitute a part of the present application, the drawings show the embodiments of the present application, and serving to explain the principles of the present application together with the description. In the drawings:
Fig. 1 is a three-dimensional schematic view of a three-dimensional printing plate-changing transporting apparatus according to the present application.
Fig. 2 is a top view of a collecting basket according to the present application.
Fig. 3 is a front cross-sectional view of a three-dimensional printing plate-changing transporting apparatus according to the present application.
Fig. 4 is a matching schematic view of a positioning groove and a positioning portion according to the present application.
Fig. 5 is a three-dimensional schematic view of an internal structure of a collecting basket according to the present application.

### Preferred Embodiment of the Present Disclosure

In order to illustrate the technical solutions in the embodiments of the present application more clearly, the drawings that need to be used in the description of the embodiments will be briefly introduced below. Obviously, the drawings in the following description are only some embodiments of the present application, and for those skilled in the art, other drawings can also be obtained based on these drawings without creative effort.

As indicated in this application and claims, the terms "a", "an", "a kind of" and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

The relative arrangements of components and steps, numerical expressions and numerical values set forth in these embodiments do not limit the scope of the present application unless specifically stated otherwise. At the same time, it should be understood that, for the convenience of description, the sizes of the various parts shown in the drawings are not drawn according to the actual proportional relationship. Techniques, methods and devices known to those of ordinary skill in the relevant art may not be discussed in detail, but where appropriate, such techniques, methods and devices should be considered part of the authorized specification. In all embodiments shown and discussed herein, any specific values should be construed as illustrative only, and not as limiting. Therefore, other examples of the exemplary embodiment may have different values. It should be noted that like numerals and letters denote like items in the following figures, therefore, once an item is defined in one figure, it does not require further discussion in subsequent drawings.

In the description of the present application, it should be understood that orientation words such as "front, back, up, down, left, right", " landscape, portrait, vertical, horizontal" and "top, bottom" etc. indicating the orientation or positional relationship is generally based on the orientation or positional relationship shown in the drawings, only for the convenience of describing the application and simplifying the description, in the absence of a contrary statement, these orientation words do not indicate or imply that the device or element referred to must have a specific orientation or be constructed and operated in a specific orientation, and therefore cannot be construed as limiting the scope of protection of this application; the orientation words "inside and outside" refer to inside and outside relative to the outline of each part itself.

For the convenience of description, spatially relative terms may be used here, such as "on ...", "over ...", "on the upper surface of ...", "above", etc., to describe the spatial positional relationship between one device or feature and other devices or features. It will be understood that, in addition to the orientation depicted in the drawings, the spatially relative terms are intended to encompass different orientations of the device in use or operation. For example, if the device in the drawings is turned over, devices described as "on other devices or configurations " or "above other devices or configurations " would then be oriented "beneath other devices or configurations " or "under other devices or configurations ". Thus, the exemplary term "above" can encompass both an orientation of "above" and "beneath". The device may be otherwise oriented (rotated 90 degrees or at other orientations), and making a corresponding explanation for the space relative description used here.

In addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

It will be understood that when an element is referred to as being "on," "connected to," "coupled to" or "in contacting with" another element, it can be directly on, connected to, coupled to, or in contact with the other element, or there may be an intervening component. In contrast, when an element is referred to as being "directly on," "directly connected to," "directly coupled to" or "directly in contacting with" another element, there are no intervening elements present.

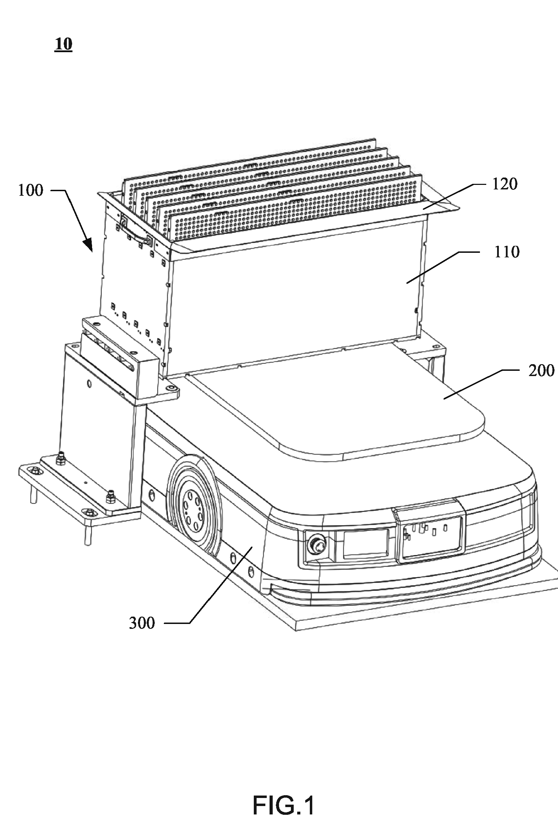

Fig. 1 is a three-dimensional schematic view of a three-dimensional printing plate-changing transporting apparatus according to the present application. As shown in Fig. 1, the present application provides a three-dimensional printing plate-changing transporting apparatus 10, which includes a collecting basket 100, a supporting platform 200 and a moving mechanism 300, the supporting platform 200 is disposed between the collecting basket 100 and the moving mechanism 300, the supporting platform 200 is fixedly mounted on the moving mechanism 300 and configured to bear the collecting basket 100.

Specifically, the collecting basket 100 in the present application is used to accommodate multiple forming platforms 20, depending on different working stages of the plate-changing transporting apparatus 10, the multiple forming platforms 20 include a blank forming platform 20 to be placed into a printing apparatus or a printed forming platform 20 with an attached printing model after printed by the printing apparatus. It can be understood that before the printing process starts, the collecting basket 100 is used to hold multiple blank forming platforms 20 to be placed into the printing apparatus; after the printing process is completed, the printed models need to be subjected to subsequent spin-drying treatment, and the collecting basket 100 is configured to carry multiple printed forming platforms 20 attached with printing models.

The moving mechanism 300 of this application is suitable for driving the supporting platform to move, so that to drive the collecting basket loaded with the multiple forming platforms to move between an initial position and a target position, and the initial position and the target position can be set according to different working time of the plate-changing transporting apparatus 10. Similarly, before the printing process starts, the plate-changing transporting apparatus 10 needs to transport the blank forming platform 20 to the position where the printing apparatus is located, and at this time, the initial parking position of the plate-changing transporting apparatus 10 serves as the initial position, and the position of the printing apparatus is the target position. After the printing process is finished, the position of the printing apparatus serves as the initial position, and the position of the spin-drying apparatus serves as the target position. In the embodiment shown in Fig. 1, the moving mechanism 300 includes an Automated Guided Vehicle.

Furthermore, the collecting basket 100 includes a main body 110 and a flange 120 arranged at an upper edge of the main body, and at least a part of the flange 120 is located on a moving path where the multiple forming platforms 20 are placed into the collecting basket, which is suitable to receive uncured resin liquid on the forming platforms 20 and prevent splashing of the resin liquid.

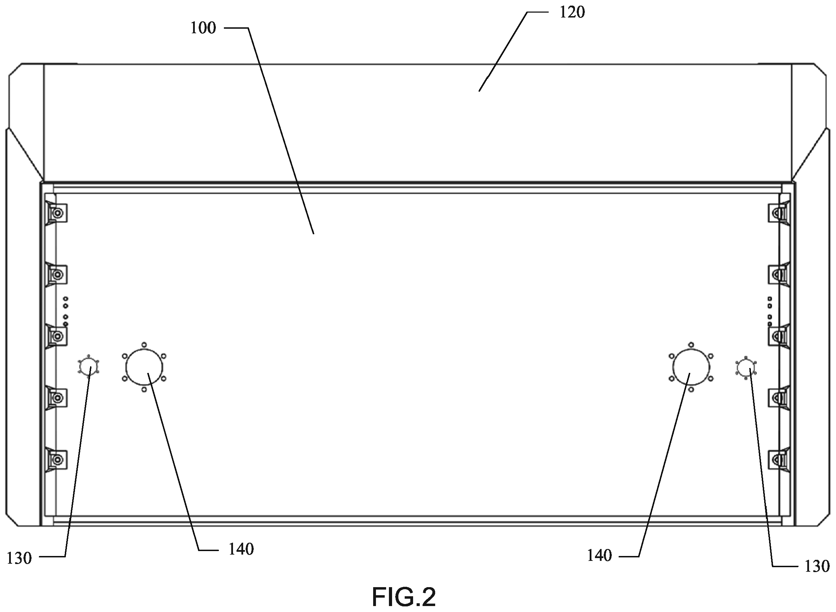

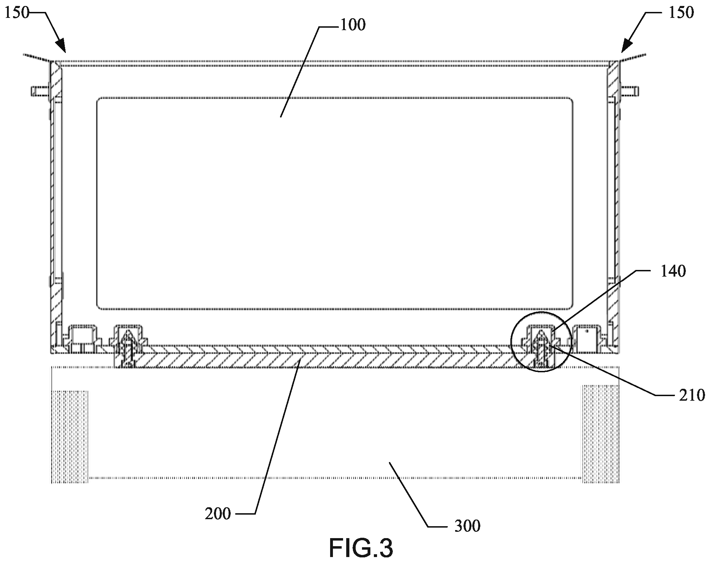

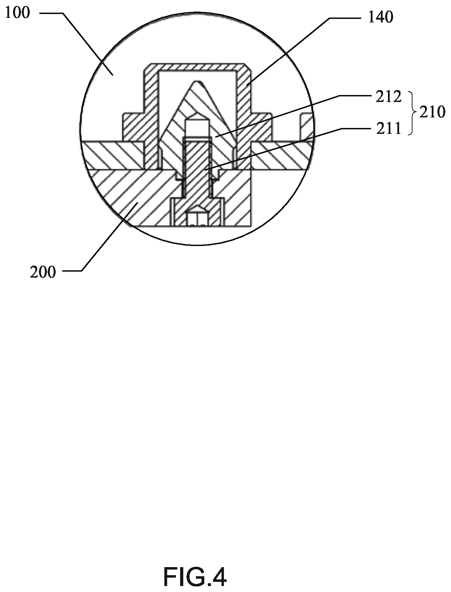

Fig. 2 is a top view of a collecting basket according to the present application;, Fig. 3 is a front cross-sectional view of a three-dimensional printing plate-changing transporting apparatus according to the present application and Fig. 4 is a matching schematic view of a positioning groove and a positioning portion according to the present application. With combined reference to Figs. 1 - 4, in this preferred embodiment, a bottom of the collecting basket 100 is further provided with two liquid drain holes 130, when the collecting basket 100 is adapted to carry printed forming platform 20 attached with printing models, uncured resin liquid on the surfaces of the printing models may accumulate inside the collecting basket 100, and the liquid drain holes 130 are configured to drain the resin liquid inside the collecting basket 100 from the bottom. In other embodiments, the quantity of the liquid drain holes 130 may be more or less (at least one), and their positions may be adjusted as required, which is not specifically limited in the present application.

Furthermore, a bottom of the collecting basket 100 is further provided with two positioning grooves 140, the supporting platform 200 is further provided with two positioning portions 210 adapted to match with the positioning grooves 140. The positions of the positioning grooves 140 at the bottom of the collecting basket 100 correspond to the positions of the positioning portions 210 on the surface of the supporting platform 200, when the collecting basket 100 is matched with the supporting platform 200, the positioning portions 210 are adapted to cooperate with the positioning grooves 140.

Specifically, with reference to Figs. 2 and 4, the positioning groove 140 in this embodiment is a circular groove, positioning portion 210 includes a fixing screw 211 and a tapered protrusion 212 arranged on the fixing screw 211, the positioning portion 210 inserts into the positioning groove 140 by a tip of the tapered protrusion 212. It can be understood that the shape of the tapered protrusions 212 is adapted to cooperate with the positioning grooves 140. In other embodiments, the shape of the positioning groove 140 and the head structure of the positioning portion 210 may adopt other combinations, such as polygons and pyramids, which are not specifically limited in the present application.

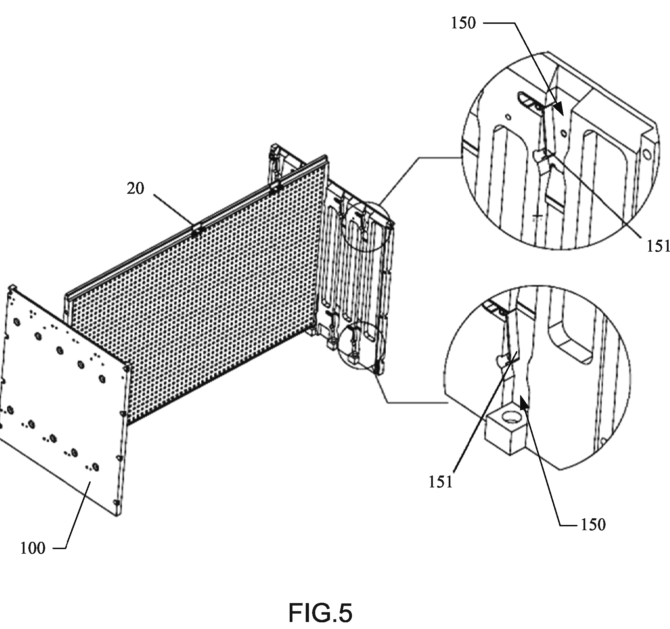

Fig. 5 is a three-dimensional schematic view of an internal structure of a collecting basket according to the present application. With reference to Figs. 1 and 5, in this embodiment, the collecting basket 100 further includes multiple limiting clamping grooves 150, each limiting clamping groove 150 is used to limit one forming platform 20 inside the collecting basket 100. Further, an upper part and a lower part of each limiting clamping groove 150 further possesses a limiting elastic piece 151, and the limiting elastic piece 151 locates at a first position when the forming platform 20 is not loaded into the collecting basket 100, and the limiting elastic piece 151 is compressed to a second position after the forming platform 20 is loaded into the collecting basket 100.

Specifically, the first position refers to the initial position of the limiting elastic pieces 151 when no external extrusion force is applied, at this time, the lower ends of the limiting elastic pieces 151 as shown in Fig. 5 protrude further outward than the upper ends; after the forming platform 20 is loaded, the lower end of the limiting elastic piece 151 as shown in Fig. 5 is squeezed and compressed to the second position, in this state, the lower end of the limiting elastic piece 151 is closer to the upper end in the direction perpendicular to the extending direction of the limiting elastic piece 151 compared with the first position. As the forming platform 20 is loaded into the collecting basket 100, the limiting elastic piece 151 at the upper position is compressed first, the limiting elastic piece 151 at the lower position is further compressed. It can be understood that in other embodiments, the number of the limiting elastic pieces 151 may be increased or decreased (at least one).

The application further provides a three-dimensional printing plate-changing system, comprising a printing apparatus, the above-mentioned plate-changing transporting apparatus 10 (referring to Fig.1) and a spin-drying apparatus, wherein, the plate-changing transporting apparatus is configured to carry and drive a printed forming platforms with an attached printing model after printed by the printing apparatus to the spin-drying apparatus. In a preferred embodiment, the plate-changing system further includes a manipulator, the manipulator is suitable to grip the printed forming platform and place the printed forming platform into the collecting basket 100 of the plate-changing transporting apparatus 10. For the specific placement method, please refer to the foregoing part related to the plate-changing transporting apparatus 10, which will not be repeated herein.

The basic concepts have been described above, obviously, for those skilled in the art, the above disclosure of the disclosure is only an example, and does not constitute a limitation to the present application. Although not expressly stated here, various modifications, improvements and amendments to this application may be made by those skilled in the art. Such modifications, improvements, and amendments are suggested in this application, so such modifications, improvements, and amendments still belong to the spirit and scope of the exemplary embodiments of this application.

Meanwhile, the present application uses specific words to describe the embodiments of the present application. For example, "one embodiment", "an embodiment", and/or "some embodiments" refer to a certain feature, structure or characteristic related to at least one embodiment of the present application. Therefore, it should be emphasized and noted that two or more references to "one embodiment" or "an embodiment" or "an alternative embodiment" in different places in this specification do not necessarily refer to the same embodiment. In addition, certain features, structures or characteristics of one or more embodiments of the present application may be properly combined.

In the same way, it should be noted that in order to simplify the expression disclosed in the present application and help the understanding of one or more embodiments of the disclosure, in the foregoing description of the embodiments of the present application, sometimes multiple features are combined into one embodiment, drawings or descriptions thereof. However, this method of disclosure does not imply that the subject matter of the application requires more features than are recited in the claims. Indeed, embodiment features are less than all features of a single foregoing disclosed embodiment.

In some embodiments, numbers describing the quantity of components and attributes are used, it should be understood that such numbers used in the description of the embodiments use the modifiers "about", "approximately" or "substantially" in some examples. Unless otherwise stated, "about", "approximately" or "substantially" indicates that the stated figure allows for a variation of ±20%. Accordingly, in some embodiments, the numerical parameters used in the specification and claims are approximations that can vary depending upon the desired characteristics of individual embodiments. In some embodiments, numerical parameters should take into account the specified significant digits and adopt the general digit reservation method. Although the numerical ranges and parameters used in some embodiments of the present application to confirm the breadth of the scope are approximate values, in specific embodiments, such numerical values are set as precisely as practicable.

Although the present application has been described with reference to the current specific embodiments, those of ordinary skill in the art should recognize that the above embodiments are only used to illustrate the present application, and various equivalent changes or substitutions can also be made without departing from the spirit of the present application, therefore, as long as the changes and modifications to the above-mentioned embodiments are within the spirit of the present application, they will all fall within the scope of the claims of the present application.

## Claims

1. A three-dimensional printing plate-changing transporting apparatus, **characterized by** comprising:
a collecting basket, used for accommodating multiple forming platforms, the multiple forming platforms including a blank forming platform to be placed into a printing apparatus or a printed forming platform with an attached printing model after printed by the printing apparatus;
a supporting platform, used for bearing the collecting basket; and
a moving mechanism, the supporting platform fixedly mounted on the moving mechanism, and the moving mechanism is suitable for driving the supporting platform to move, so that to drive the collecting basket loaded with the multiple forming platforms to move between an initial position and a target position.

2. The plate-changing transporting apparatus according to claim 1, **characterized in that**, the collecting basket includes a main body and a flange arranged at an upper edge of the main body, and at least a part of the flange is located on a moving path where the multiple forming platforms are placed into the collecting basket.

3. The plate-changing transporting apparatus according to claim 1, **characterized in that**, a bottom of the collecting basket is further provided with one or more liquid drain holes.

4. The plate-changing transporting apparatus according to claim 1, **characterized in that**, a bottom of the collecting basket is further provided with one or more positioning grooves, the supporting platform is further provided with one or more positioning portions adapted to match with the positioning grooves.

5. The plate-changing transporting apparatus according to claim 4, **characterized in that**, one of the positioning portions includes a fixing screw and a tapered protrusion arranged on the fixing screw, wherein, the positioning portions insert into the positioning grooves by a tip of the tapered protrusion.

6. The plate-changing transporting apparatus according to claim 1, **characterized in that**, the collecting basket further includes multiple limiting clamping grooves, each limiting clamping groove is used to limit one forming platform inside the collecting basket.

7. The plate-changing transporting apparatus according to claim 6, **characterized in that**, an upper part and/or a lower part of the limiting clamping groove further possesses a limiting elastic piece, the limiting elastic piece locates at a first position when the forming platform is not loaded into the collecting basket, and the limiting elastic piece is compressed to a second position after the forming platform is loaded into the collecting basket.

8. The plate-changing transporting apparatus according to claim 1, **characterized in that**, the moving mechanism further includes an Automated Guided Vehicle (AGV).

9. A three-dimensional printing plate-changing system, comprising a printing apparatus, the plate-changing transporting apparatus according to any one of claims 1 - 8, and a spin-drying apparatus, wherein, the plate-changing transporting apparatus is configured to carry and drive a printed forming platform with an attached printing model after printed by the printing apparatus to the spin-drying apparatus.

10. The plate-changing system according to claim 9, **characterized by** further comprising a manipulator, the manipulator is suitable to grip the printed forming platform and place the printed forming platform into the collecting basket of the plate-changing transporting apparatus.
